# EUROPÄISCHE PATENTANMELDUNG

(11) **EP 2 650 108 A1**
(43) Veröffentlichungstag der Anmeldung: **16.10.2013**
(21) Anmeldenummer: 12164199.7
(22) Anmeldetag: 13.04.2012
(51) Int. Cl.: B29C 70/08, B62D 29/00, B21D 22/02

(54) **Verfahren zur Herstellung eines Halbzeugs oder Bauteils aus einem Metallträger und einer Beschichtung aus faserverstärktem Kunststoff, Halbzeug oder Bauteil hierfür und Verwendung zur Herstellung eines Strukturbauteils**

(71) Anmelder: Voestalpine Stahl GmbH, 4020 Linz (AT)
(72) Erfinder: Eyßell, Carola, 4225 Luftenberg (AT); Androsch, Franz, 4181 Oberneukirchen (AT); Strauß, Bernhard, 4060 Leonding (AT); Walch, Christian, 4060 Leonding (AT)

(57) **Zusammenfassung**

Es wird ein Verfahren zur Herstellung eines Halbzeugs oder Bauteils (2) bei auf einem Metallträger (3), insbesondere einem (4), eine insbesondere Beschichtung (6, 17) mit Kunststoff (FKV) auf-und der beschichtete Metallträger (3) in einem weiteren Schritt zu einem Halbzeug oder (2) umgeformt, insbesondere tiefgezogen oder gebogen, wird. Für ein verbessertes und kostengünstiges Verfahren wird vorgeschlagen, dass der höchstens bereichsweise Metallträger (3) dem Umformen erst dann unterworfen wird, wenn Beschichtung (6, 17) in Aushärtung wenigstens eine blockfeste Oberfläche (12) ausbildet,

## Beschreibung

Die Erfindung betrifft ein Verfahren zur Herstellung eines Halbzeugs oder Bauteils, bei dem auf einem Metallträger, insbesondere einem Stahlblech, eine insbesondere aushärtbare Beschichtung mit faserverstärktem Kunststoff (FKV) aufgebracht, und der beschichtete Metallträger in einem weiteren Schritt zu einem Halbzeug oder Bauteil umgeformt, insbesondere tiefgezogen oder gebogen, wird.

Aus dem Stand der Technik sind Hybridwerkstoffe, aufweisend mehrere übereinanderliegende Metallschichten, jeweils mit vollflächig faserverstärkten unidirektionalen Prepreg-Lagen beschichtet, bekannt (DE19956394B4), die nach einer Umformung des Hybridwerkstoffs zu einem Profil ausgehärtet werden. Ein derartiges Verfahren ist jedoch nachteilig vergleichsweise empfindlich auf vorzeitige Aushärtung der Prepreg-Schicht, bevor der Hybridwerkstoff seine endgültige Form durch sein Umformen eingenommen hat. Dies kann sich insbesondere in einer verminderten Formgenauigkeit des umgeformten Hybridwerkstofis samt Beschädigungen am faserverstärkten Kunststoff (FKV) bzw. vorimprägnierten Carbonfasern (CFK-Prepreg) erweisen. Ein reproduzierbares Verfahren kann auf diese Weise also nicht sichergestellt werden. Außerdem ist die Durchführung eines Verfahrens unter Verwendung unausgehärteter Prepreg-Schichten vergleichsweise aufwendig. Zudem erfordern derartige Hybridwerkstoffe einen vergleichsweise hohen Materialbedarf an faserverstärktem Kunststoff. Kostengünstige Halbzeuge oder Bauteile sind durch solch ein Verfahren nicht herstellbar.

Außerdem ist es für die Herstellung eines faserverstärkten Halbzeugs oder Bauteils bekannt, ein Stahlblech als Metallträger zunächst umzuformen und in einem weiteren Schritt mit einem ausgehärteten FVK-Teil partiell zu versehen bzw. damit zu beschichten. Die voneinander getrennten Verfahrensschritte, nämlich Formgebung des Metallträgers und Formgebung des FVK-Teils, samt ihrem abschließenden Verbinden, beispielsweise mit Bolzen (DE102009009112A1), sind vergleichsweise aufwendig durchzuführen und erfordern zudem kostenintensive Halbzeuge bzw. Bauteile, zumal dieses Verfahren eines vergleichsweise hohen Automatisierungsaufwands bedarf.

Es ist daher die Aufgabe der Erfindung, ausgehend vom eingangs geschilderten Stand der Technik, das Herstellungsverfahren für ein verstärktes Halbzeug oder Bauteil nicht nur zu vereinfachen, sondern auch robust zu gestalten, um somit auch eine hohe Reproduzierbarkeit des Verfahrens zu erlangen. Außerdem soll das Verfahren einem einfach zu automatisierenden Verfahrensablauf zugänglich sein.

Die Erfindung löst die gestellte Aufgabe dadurch, dass der höchstens bereichsweise beschichtete Metallträger dem Umformen erst dann unterworfen wird, wenn seine Beschichtung in ihrer Aushärtung wenigstens eine blockfeste Oberfläche ausbildet.

Wird der Metallträger dem Umformen erst dann unterworfen wird, wenn seine Beschichtung in ihrer Aushärtung wenigstens eine blockfeste Oberfläche ausbildet, kann das Verfahren gegenüber unvermeidbaren Aushärtereaktionen der FVK-Beschichtung robuster ausgebildet werden, weil selbst Aushärtereaktionen der Beschichtung im Verfahren zugelassen werden. Im Gegensatz zum Stand der Technik müssen erfindungsgemäß auch Lagerzeiten der Metallträger weniger streng beachtet werden, um damit Eigenschaftsveriuste der Polymermatrix durch Überschreiten des Verarbeitungszeitraums in Kauf nehmen zu müssen. Dadurch kann sich auch eine Entspannung im Verfahrensablauf ergeben, insbesondere weil die Verfahrensschritte Beschichtung und Umformen voneinander zeitlich unabhängiger erfolgen können, was gerade für ein Tiefziehen oder Biegen des Metallträgers zu dessen Formgebung von Vorteil sein kann. Der blockfeste Zustand der Oberfläche der Beschichtung kann nämlich auch nach der Umformung eine saubere Trennung von beschichtetem Metallträger und Werkzeug sicherstellen, wodurch hohe Reproduzierbarkeit und vergleichsweise einfache Automatisierung des Verfahrens möglich werden können. Besonders kann sich das erfindungsgemäße Verfahren zudem dadurch auszeichnen, dass der Metallträger höchstens bereichsweise beschichtet wird, um damit die plastische Verformbarkeit des Metallträgers im Wesentlichen zu erhalten. Erhöhten Umformgraden kann daher trotz einer vergleichsweisen zugfesten FVK-Beschichtung gefolgt werden, wodurch selbst anspruchsvolle Konturen, beispielsweise die eines Schwellers oder Längsträgers eines Kraftfahrzeugs, in den Metallträger formgenau eingebracht werden können. Außerdem kann selbst die zwar blockfest jedoch nicht vollständig ausgehärtete FVK-Beschichtung eine gewisse eigene plastische Verformbarkeit zulassen und damit positiv zum Umformverhalten des Metallträgers beitragen, wodurch selbst engen Radien versagensfrei gefolgt werden kann. Zugleich können sich die beschichteten Trägerbereiche durch besonders hohe Festigkeitswerte auszeichnen und den Metallträger während des Umformens und auch nach dem Umformen mechanisch stabilisieren. Erfindungsgemäß kann somit ein hoher Grad an plastischem Formänderungsvermögen mit hohen mechanischen Festigkeitswerten kombiniert und zugleich eine vergleichsweise einfache Herstellungsvorschrift für faserverstärkte Metallträger, vorzugsweise Stahlbleche, angegeben werden.

Selbstverständlich kann der Metallträger auch aus anderen Metallen gefertigt sein, insbesondere Aluminiumbleche oder Magnesiumbleche können vorteilhaft eingesetzt werden.

Im Allgemeinen wird erwähnt, dass der faserverstärkte Kunststoff (FKV) eine thermoplastische oder duroplastische Kunststoffmatrix in Kombination mit anorganischen oder organischen Verstärkungsfasern, wie z.B. Glas, Basalt, Kohlenstoff oder Aramid als Endlos-, Lang- oder Kurzfaser, aufweisen bzw. daraus bestehen kann. Weiter wird im Allgemeinen erwähnt, dass unter blockfest verstanden werden kann, dass die Oberfläche der Beschichtung nicht mehr klebend ist, auch wenn diese unter Druck auf eine andere Oberfläche, beispielsweise von einem Umformwerkzeug, aufgedrückt wird.

Vergleichsweise hohen Umformgraden kann gefolgt werden, wenn der Metallträger derart umgeformt wird, dass sich dessen Umformradien folgende plastische Formänderung im Wesentlichen in seinen beschichtungsfreien Bereichen ausbilden. Diese beschichtungsfreien Trägerbereiche können nämlich plastischen Verformungen weitgehend unbeeinträchtigt von der FVK-Beschichtung folgen. Dies umso mehr, wenn sich die plastischen Formänderungen ausschließlich in diesen beschichtungsfreien Bereichen ausbilden.

Das erfindungsgemäße Verfahren kann sich insbesondere auch dann auszeichnen, wenn kohlenstofffasewerstärkter Kunststoff (CFK) als faserverstärkter Kunststoff (FKV) mit insbesondere einer duroplastischen Matrix auf den Metallträger aufgebracht wird.

Ein kostengünstiges und dennoch hochfestes Halbzeug Endprodukt kann geschaffen werden, wenn vorimprägnierte Carbonfasern aufgebracht werden. Damit kann nämlich ein, den Anforderungen entsprechend optimiertes und hochfestes Halbzeug bzw. Endprodukt bei vergleichsweise geringer Erhöhung dessen Gewichts hergestellt werden. Andere vorimprägnierte Fasern sind vorstellbar, beispielsweise Glasfasern, Aramidfasen - jedoch haben sich Carbonfasern mit einer duroplastischen Matrix, aufgebracht auf einem Stahlblech, für ein Strukturbauteil eines Kraftfahrzeugs, insbesondere eines Schwellers oder Längsträgers, als besonders vorteilhaft hinsichtlich erreichbarer Festigkeitswerte bei vertretbaren Herstellkosten herausgestellt.

Wird der Langfasern aufweisende faserverstärkte Kunststoff (FKV) auf den Metallträger aufgebracht, kann die Beschichtung eines Metallträgers vergleichsweise rasch durchgeführt werden. Somit können die Herstellungskosten aufgrund kurzer Produktionszeiten vermindert werden. Ein derartiges Aufbringen der Langfaserbeschichtung ist mit Hilfe von Extrusion, Pultrusion, Spritzbeschichtung oder Schablonenbeschichtung denkbar.

Alternativ zu den Lang-fasern kann die Beschichtung auch dann schnell durchgeführt werden, wenn ein Gewebe oder Gelege des faserverstärkten Kunststoffs (FKV) in zugeschnittener Form auf den Metallträger aufgebracht wird. Mit solch einer Matrize, die entsprechend den beschichtungsfreien Trägerbereichen Aussparungen aufweist, kann außerdem ein kontinuierliches Verfahren zur Herstellung von kostengünstigem Halbzeugen oder Endprodukten ermöglicht werden.

Das Gewebe oder Gelege kann entweder mit der Kunststoffmatrix vorimprägniert auf den Metallträger aufgebracht oder nach dem Aufbringen auf dem Metallträger mit der Kunststoffmatrix imprägniert werden. Für eine Automatisierung des Herstellverfahrens hat sich dabei insbesondere ein mit der Kunststoffmatrix imprägniertes Gewebe zum Auflegen auf den Metallträger ausgezeichnet.

Wird die Beschichtung auf einen metallisch und/oder organisch vorbeschichteten Metallträger, eventuell unter Vorbehandlung mit einem Haftvermittler, aufgebracht, kann die Gefahr eines Versagens der stoffschlüssigen Verbindung zwischen Metallträger und Beschichtung beim Umformen deutlich verringert werden. Die Reproduzierbarkeit des Verfahrens und dessen Parameter kann damit erhöht werden. Au-βerdem kann mit einer derartigen Vorbehandlung die Resistenz gegenüber Wasser, Chemikalien und klimatischen Einflüssen und zusätzlich auch ein verbesserter Korrosionsschutz geschaffen werden.

Werden mehrere Lagen an Gewebe oder Gelege für einen insbesondere multidirektionalen Schichtaufbau des faserverstärkten Kunststoffs (FKV) übereinander gelegt, kann die mechanische Festigkeit des Halbzeugs oder Endprodukts erheblich verbessert werden.

Zur Erweiterung des blockfesten Bereiches und zur Vermeidung von eventuellen Anhaftungen am Umformwerkzeug kann vor dem Umformen auf die Beschichtung eine Trennschicht aufgebracht werden.

Das Verfahren kann sich insbesondere zur Herstellung eines Halbzeugs oder Bauteils auszeichnen.

Besonders vorteilhaft kann das erfindungsgemäße Verfahren auch zur Herstellung eines Strukturbauteils verwendet werden, wobei sich dies insbesondere auch für einen Schweller oder Längsträger eines Kraftfahrzeugs auszeichnen konnte.

Besonders kann sich ein Halbzeug mit einer höchstens bereichsweise aufgebrachten Beschichtung aus faserverstärktem Kunststoff, wobei die Beschichtung zumindest eine blockfeste Oberfläche aufweist, dadurch auszeichnen, für ein Umformverfahren verwendet zu werden, weil dieses Halbzeug trotz hoher plastischer Verformbarkeit auch nach seinem Umformen höchsten mechanischen Belastungsanforderungen genügen kann.

In den Figuren wird beispielsweise das erfindungsgemäße Verfahren näher dargestellt. Es zeigen
- Fig. 1: einen Verfahrensablauf mit auf einem Metallträger aufgelegtem faserverstärkten (FKV),
- Fig. 2: einen Verfahrensablauf mit einem Metallträger, aufweisend aufgebrachten faserverstärkten Kunststoff (FKV) und
- Fig. 3: eine abgerissene Schnittansicht auf ein nach den Figuren 1 und 2 dargestelltes Bauteil.

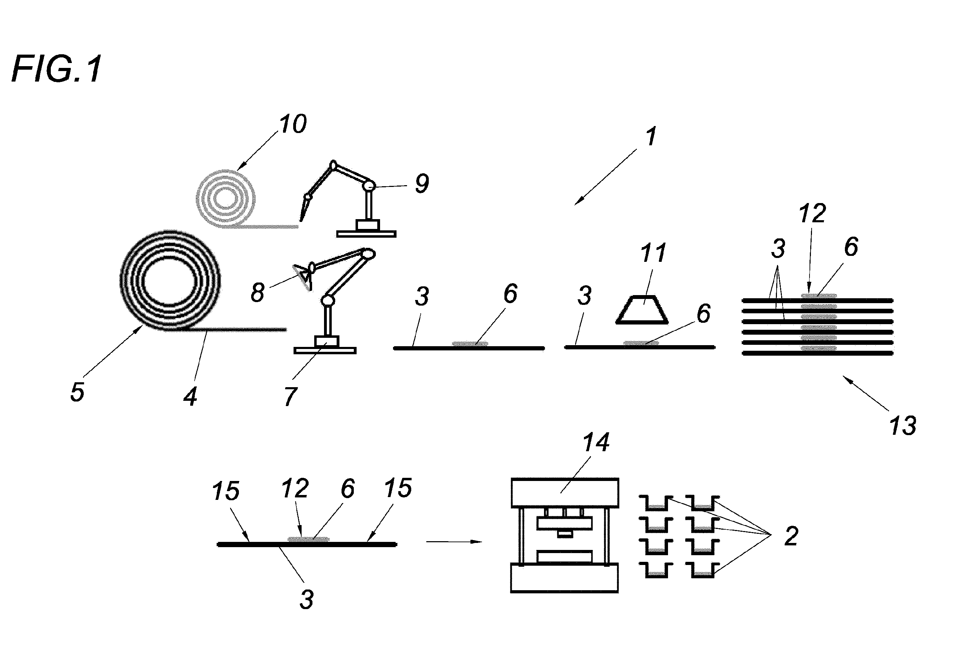

Gemäß dem nach Fig. 1 dargestellten Verfahrensablauf 1 zur Herstellung eines Bauteils 2 wird im ersten Schritt auf einen Metallträger 3, der von einem Coil 4 aus Stahlblech 5 abgetrennt wird, eine aushärtbare Beschichtung 6 mit faserverstärktem Kunststoff (FKV) aufgebracht. Der Metallträger 3 wird zuvor eventuell noch gereinigt bzw. chemisch vorbehandelt, was allerdings nicht näher dargestellt worden ist, Zum Aufbringen der Beschichtung 6 ist ein Roboter 7 vorgesehen, der einen zuschnitt 8 vom roboter 9 aufnimmt. Der Roboter 9 schneidet zu diesem Zweck ein mit der Kunststoffmatrix vorimprägniertes Gewebe 10 entsprechend der zu beschichteten Bereichsflächen des Metallträger 3 zu. Der beschichtete Metallträger 3 wird in weiterer Folge einer Teilaushärtung mit Hilfe einer Trocknungs- bzw. Flärtevorrichtung 11 unterworfen, wonach die Beschichtung 6 wenigstens eine blockfeste Oberfläche 12 ausbildet. Dadurch der Metallträger 3 ohne weiteres auf einen Stapel 13 aufgelegt und damit beispielsweise zwischengelagert oder für einen Weitertransport vorbereitet werden. Insbesondere aber kann damit ermöglicht werden, dass der beschichtete Metallträger 3 in einem weiteren Schritt zu einem Bauteil 2 umgeformt werden kann, da seine Beschichtung 6 in ihrer Aushärtung wenigstens eine blockfeste Oberfläche 12 ausbildet. So wird der beschichtete Metallträger 3 in ein Tiefziehwerkzeug 14 eingebracht und umgeformt. Da der Metallträger 3 höchstens bereichsweise beschichtet ist, wie dies der Fig. 1 zu entnehmen ist, kann auch eine vergleichsweise hohe plastische Verformbarkeit des Metallträgers 3 sichergestellt werden. Es können also selbst hohe Umformgrade versagensfrei erfüllt werden, wie dies beispielsweise bei einem Schweller oder Längsträger eines Kraftfahrzeugs erforderlich sein kann,

Wie in Fig. 1 ebenso zu erkennen, ist überall dort, wo der der Metallträger 3 durch sein Tiefziehen einer plastischen Umformung unterliegt, ein beschichtungsfreier Bereich 15 vorgesehen. Es können aber auch entsprechend den Anforderungen weitere beschichtungsfreie Bereiche am Metallträger 3 vorhanden sein.

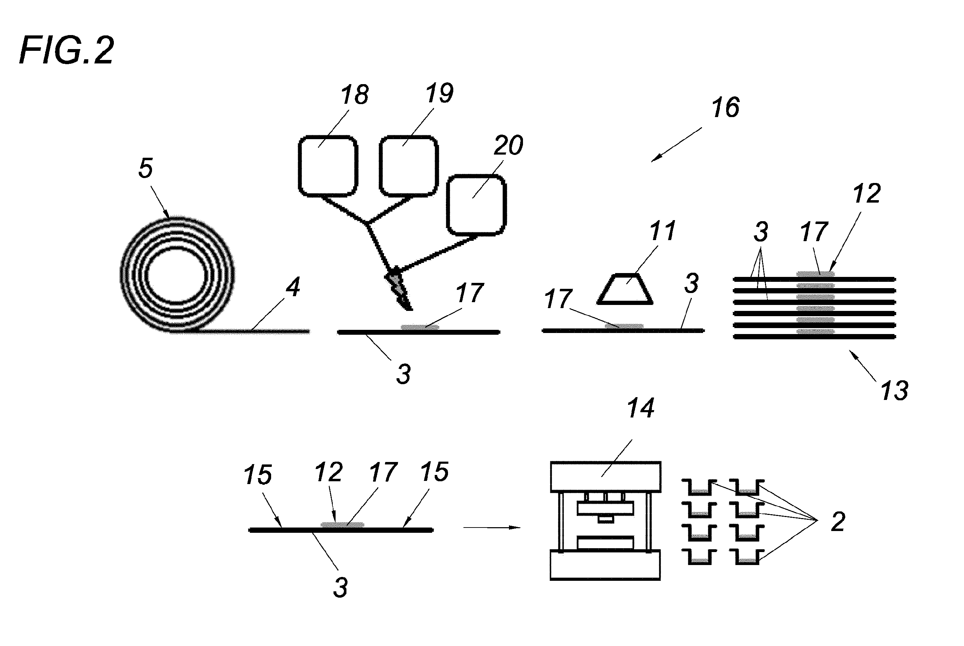

Zum Unterschied zu dem nach Fig. 1 dargestellten Verfahren 1 weist das Verfahren 16 nach Fig. 2 eine andere Art der Aufbringung einer Beschichtung 17 auf den Metallträger 3 auf. Harz 18 und Härten 19 werden in einem vorgegebenen Verhältnis mit Fasern 20, vorzugsweise Langfasern, gemischt und auf den Metallträger 3 appliziert. Anschließend erfolgt, gleich wie bei Fig. 1, eine blockfeste Aushärtung der Beschichtung 17 mit Hilfe einer Trocknungs- bzw. Härtevorrichtung 11. Die beschichteten Metallträger 3 können dann wieder auf einen Stapel 13 aufgelegt bzw. auch sofort einem Tiefziehen mit Hilfe des Tiefziehwerkzeugs 14 unterworfen werden, was nicht näher dargestellt worden ist.

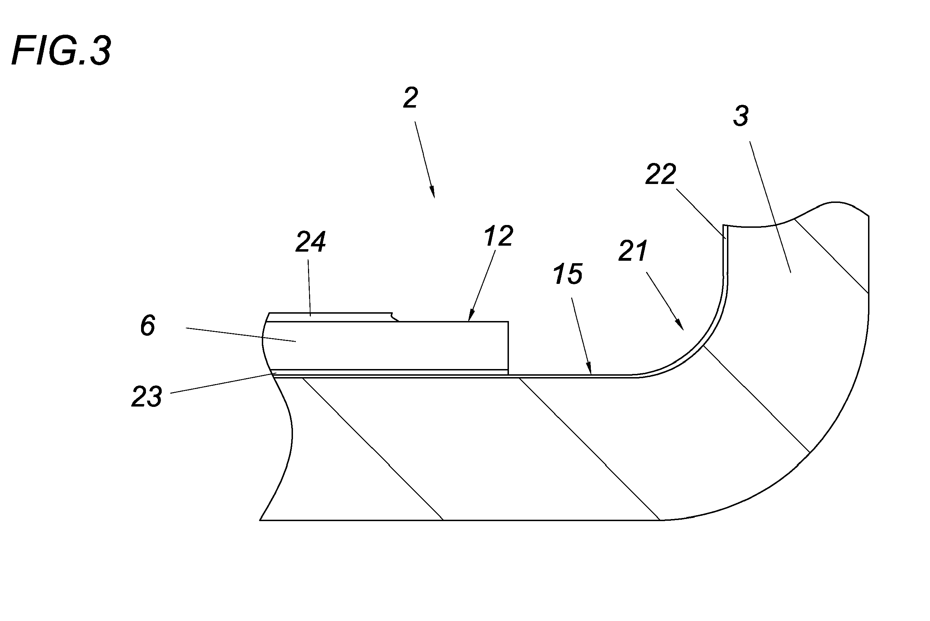

Gemäß Fig. 3 ist zu erkennen, dass der Metallträger 3 beschichtungsfreie Bereiche 15 aufweist, die beim Umformen die plastischen Formänderungen des Metallträgers 3 aufnehmen, welche den Umformradien 21 folgen. Damit ist eine vergleichsweise hohe plastische Umformbarkeit des beschichteten Metallträgers 3 gewährleistet. Der Metallträger weist weiter eine metallisch und/oder organisch Schutzbeschichtung 22, beispielsweise eine Zinkschicht auf. Zudem ist zwischen der Beschichtung 6 und der Schutzbeschichtung 22 ein Haftvermittler 23 vorgesehen. Auf die Beschichtung 6 bzw. 7 ist noch eine Trennschicht 24 aufgebracht.

Vorteilhafterweise kann das erfindungsgemäße Verfahren zur Optimierung der mechanischen Eigenschaften im Crashverhalten hinsichtlich des Stauch- bzw. Biegeverhaltens verwendet werden.

In Tabelle 1 werden beispielhaft die mechanischen Eigenschaften von nicht beschichteten und beschichteten Hutprofilen gegenübergestellt.

**Tabelle 1**

| | **Stahlblech** | **Stahlblech mit vorimprägniertem Gelege** | **Stahlblech mit nachträglich imprägnierter Gelege** |
|---|---|---|---|
| **Faservolumenanteil in der Polymer-matrix** | - | 40 bis 70% | 35 bis 85% |
| **Blechdicke** | 1mm | 1mm | 1mm |
| **Beschichtungsdicke** | - | 1mm | 0,4 bis 0,6mm |
| Spezifische absorbierte Energie beim quasistatischem axialen Stauchen | 100% | > 125% | > 120% |
| Maximale Kraft beim 3-Punkt-Biegen | 100% | >135% | >120% |
| Absorbierte Energie beim 3-Punkt-Biegen | 100% | > 110% | >120% |

Für die verschiedenen Belastungen wurden folgende Versuchsaufbauten gewählt:
Für das quasistatisches axiales Stauchen: ca. 50 % der Oberfläche mit FVK-Verstärkung;
Für die 3-Punkt-Biegung: ca. 15 % der Oberfläche mit FVK-Verstärkung;
Das quasistatische axiale Stauchen wurde bei einer Verformungsgeschwindigkeit von 30 mm/min bis zu einer Verformung von 60 % durchgeführt. Der 3-Punkt-Biegetest wurde bei einer Verformungsgeschwindigkeit von 30 mm/min durchgeführt mit einem maximalen Verfahrweg von 250 mm.

Trotz einer teilweisen Beschichtung der Hutprofile sind erhebliche Verbesserungen in der Belastbarkeit gegenüber einem nicht beschichteten Hutprofil festzustellen, ohne dass damit eine Einschränkung bei den erreichbaren Umformgraden in Kauf genommen werden muss.

In Tabelle 2 wird die Festigkeit eines ebenen Halbzeugs mit unterschiedlichen FVK-Beschichtungen im Vergleich zu herkömmlichen Stahlblechen verglichen. Die FVK Beschichtung weist vor dem Zugversuch bzw. Biegeversuch zumindest eine blockfeste Oberfläche auf.

**Tabelle 2**

| | **Stahlblech** | **Stahlblech mit ten Gelege** | **Stahlblech mit nachträglich imprägniertem Gelege** | **Stahlblech mit Langfasern in der Polymer-matrix** |
|---|---|---|---|---|
| **Faservolumenanteil in der Polymermatrix** | - | 40 bis 70% | 35 bis 85% | 15 bis 50% |
| **Blechdicke** | 1mm | 1mm | 1mm | 1mm |
| **Beschichtungsdicke** | - | 1mm | 0,4 bis 0,6 mm | 0,5 bis 2mm |
| Festigkeit bei Zugversuch | 100% | > 195% (eine Lage) | > 210% (eine Lage) | > 145% |
| | | | > 270% (zwei Lagen) | |
| Absorbierte Energie bei 3-Punkt-Biegen | 100% | >231% | > 157% (eine Lage) | >176% |
| | | | > 209% (zwei Lagen) | |
| Spezifische absortierte Energie bei 3-Punkt-Biegen | 100% | > 191% | > 151% (eine Lage) | >158% |
| | | | > 180% (zwei Lagen) | |

Die Aushärtung der FVK-Beschichtung erfolgte zwischen 20 und 130°C für 120 bis 500 Minuten, Vorzugsweise bei vorimprägnieren Gelege zwischen 90 und 130 °C für 90 bis 180 Minuten und bei nachträglich imprägnierten Gelege sowie auch bei der Verwendung von Langfasern zwischen 20°C und 60°C bei mindestens 480 Minuten.

Das Verhältnis von Blechdicke zu Beschictitungsdicke hat sich in den Beispielen ein Bereich von 1:2 bis zu 1:0,4 als vorteilhaft erwiesen.

Die Stahlblechdicke bzw. Dicke des jeweiligen Metallträgermaterials kann auch variiert werden, die Erfindung kann sich besonders bei einer Blechdicke im Bereich von 0,6 bis 5 mm, insbesondere bis 2,5 mm auszeichnen.

Insgesamt ist damit gezeigt, dass die Festigkeit um 10 bis 20% gesteigert werden konnte und dies überraschenderweise mit bereits relativ dünnen FVK Schichten im Bereich von 0,2 bis 3 mm, insbesondere 0,4 bis 2 mm Beschichtungsdicke. Eine Gesamtgewichtseinsparung beispielsweise einem Schweller oder Längsträger im Bereich von über 10% kann damit durchaus erreicht werden. Dies resultiert vorteilhafterweise in einem geringen Karosserie- bzw. damit einem geringeren Fahrzeug. gesamtgewicht, welches sich in einem niedrigeren Treibstoffverbrauch widerspiegelt.

## Patentansprüche

1. Verfahren zur Herstellung eines Halbzeugs oder Bauteils (2), bei dem auf einem Metallträger (3), insbesondere einem Stahlblech (4), eine insbesondere aushärtbare Beschichtung (6, 17) mit faserverstärktem (FKV) aufgebracht, und der beschichtete Metallträger (3) in einem weiteren Schritt zu einem Halbzeug oder Bauteil (2) umgeformt, insbesondere tiefgezogen oder gebogen, wird, **dadurch gekennzeichnet**, der höchstens bereichsweise beschichtete Metallträger (3) dem Umformen erst dann unterworfen wird, wenn seine Beschichtung (6, 17) in ihrer Aushärtung wenigstens eine blockfeste Oberfläche (12) ausbildet.

2. Verfahren nach Anspruch 1, **dadurch gekennzeichnet, dass** der Metallträger (3) derart umgeformt wird, dass sich dessen Umformradien (21) folgenden plastischen Formänderungen im Wesentlichen, vorzugsweise ausschließlich, in seinen beschichtungsfreien Bereichen (15) ausbilden.

3. Verfahren nach Anspruch 1 oder 2, **dadurch gekennzeichnet, dass** kohlenstofffaserverstärkter Kunststoff (CFK) als faserverstärkter Kunststoff (FKV) mit insbesondere einer duroplastischen Matrix auf den Metallträger (3) aufgebracht wird.

4. Verfahren nach Anspruch 3, **dadurch gekennzeichnet, dass** vorimprägnierte Carbonfasern aufgebracht werden.

5. Verfahren nach einem der Ansprüche 1 bis 4, **dadurch gekennzeichnet, dass** der Langfasern aufweisende faserverstärkte Kunststoff (FKV) auf den Metallträger (3) aufgebracht wird.

6. Verfahren nach einem der Ansprüche 1 bis 5, **dadurch gekennzeichnet, dass** ein Gewebe oder Gelege des faserverstärkten Kunststoffs (FKV) in zugeschnittener Form (8) auf den Metallträger (3) aufgebracht wird.

7. Verfahren nach Anspruch 6, **dadurch gekennzeichnet, dass** das Gewebe oder Gelege entweder mit der Kunststoffmatrix vorimprägniert auf den Metallträger (3) aufgebracht wird, oder nach dem Aufbringen auf dem Metallträger (3) mit der Kunststoffmatrix imprägniert wird.

8. Verfahren nach einem der Ansprüche 1 bis 7, **dadurch gekennzeichnet, dass** die Beschichtung (6, 17) auf einen metallisch und/oder organisch vorbeschichteten Metallträger (3), eventuell unter Vorbehandlung mit einem Haftvermittler, aufgebracht wird.

9. Verfahren nach einem der Ansprüche 1 bis 8, **dadurch gekennzeichnet, dass** mehrere Lagen an Gewebe oder Gelege für einen insbesondere multidirektionalen Schichtaufbau des faserverstärkten Kunststoffs (FKV) übereinander gelegt werden.

10. Verfahren nach der Ansprüche 1 bis 9, **dadurch gekennzeichnet, dass** vor dem Umformen auf die Beschichtung (6, 17) eine Trennschicht aufgebracht wird.

11. Verfahren nach einem der Ansprüche 1 bis 10, **dadurch gekennzeichnet, dass** der Metallträger (3), insbesondere ein Stahlblech (4), eine Blechdicke von 0,6 bis 5 mm, insbesondere 1 bis 2,5 mm aufweist.

12. Verfahren nach einem der Ansprüche 1 bis 11, **dadurch gekennzeichnet**, die Beschichtung (6, 17) eine Dicke von 0,2 bis 3 mm, insbesondere 0,4 bis 2 mm aufweist.

13. Halbzeug oder Bauteil, hergestellt durch das Verfahren nach einem der Ansprüche bis 12.

14. Verwendung des Verfahrens nach Anspruch 1 bis 12 zur Herstellung eines Strukturbauteils, insbesondere Schweller oder Längsträger, eines Kraftfahrzeugs.

15. Halbzeug mit einer höchstens bereichsweise aufgebrachten Beschichtung aus faserverstärktem Kunststoff, die Beschichtung zumindest eine blockfeste Oberfläche aufweist.
